(19) Europäisches Patentamt
European Patent Office
Office européen des brevets

(11) **EP 2 446 362 B1**

(12) **EUROPÄISCHE PATENTSCHRIFT**

(45) Veröffentlichungstag und Bekanntmachung des Hinweises auf die Patenterteilung:
**14.08.2013 Patentblatt 2013/33**

(21) Anmeldenummer: **10726497.0**

(22) Anmeldetag: **22.06.2010**

(51) Int Cl.:
***G06F 11/10*** *(2006.01)*

(86) Internationale Anmeldenummer:
**PCT/EP2010/058839**

(87) Internationale Veröffentlichungsnummer:
**WO 2010/149663 (29.12.2010 Gazette 2010/52)**

(54) **VERFAHREN ZUM CODIEREN UND DECODIEREN VON DIGITALEN DATEN, INSBESONDERE VON IN EINER MIKROPROZESSOREINHEIT VERARBEITETEN DATEN**

METHOD FOR CODING AND DECODING DIGITAL DATA, PARTICULARLY DATA PROCESSED IN A MICROPROCESSOR UNIT

PROCÉDÉ DE CODAGE ET DE DÉCODAGE DE DONNÉES NUMÉRIQUES, EN PARTICULIER DE DONNÉES TRAITÉES DANS UNE UNITÉ À MICROPROCESSEUR

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.06.2009 DE 102009029979**

(43) Veröffentlichungstag der Anmeldung:
**02.05.2012 Patentblatt 2012/18**

(73) Patentinhaber: **Giesecke & Devrient GmbH**
**81677 München (DE)**

(72) Erfinder: **HOFFMANN, Lars**
**80639 München (DE)**

(56) Entgegenhaltungen:
**EP-A1- 0 280 013      EP-A2- 0 769 703**

**Beschreibung**

Die Erfindung betrifft ein Verfahren zum Codieren von digitalen Daten, insbesondere von in einer Mikroprozessoreinheit verarbeiteten Daten sowie ein entsprechendes Verfahren zum Decodieren solcher Daten.

Bei der Übertragung von digitalen Daten ist bei sicherheitskritischen Anwendungen sicherzustellen, dass unberechtigte, an den Daten durchgeführte Manipulationen erkannt werden. Insbesondere in Chipkartencontrollern ist die Erkennung von Manipulationen beim Austausch von Daten zwischen den einzelnen Funktionseinheiten der Chipkarte äußerst wichtig, da Chipkarten verstärkt Angriffen ausgesetzt sind, welche Fehler während der Abarbeitung von Chipkarten-Kommandos erzeugen. Die fehlerhaft ausgeführten Kommandos bzw. fehlerhaft übertragenen Daten lassen dabei teilweise Rückschlüsse auf intern in der Chipkarte verwendete Geheimnisse zu und ermöglichen unter Umständen einen Zugriff auf geschützte Daten.

Zur Erkennung von Manipulationen bzw. Fehlern bei der Datenübertragung zwischen verschiedenen Funktionseinheiten ist die Verwendung eines sog. Paritätscodes bekannt. Dieser Code wird in der Form von einem oder mehreren zusätzlichen Bits bei der Übertragung des entsprechenden Datums bzw. Datenworts mit übermittelt. Häufig wird der Paritätscode als ein einzelnes Paritätsbit übertragen, wobei das Paritätsbit in Abhängigkeit davon unterschiedlich gesetzt ist, ob eine ungerade oder gerade Anzahl von Einsen in dem Datenwort übertragen wird. Die Ermittlung eines Paritätsbits vergrößert das zu übertragende Datenwort nur um 1 Bit, weist jedoch den Nachteil auf, dass ein Fehler basierend auf der Paritätsinformation eines einzelnen Bits nur mit einer Wahrscheinlichkeit von 50 % erkannt werden kann. Die Fehlererkennungswahrscheinlichkeit kann durch die Hinzufügung weiterer Paritätsbits, welche z.B. jeweils die Parität eines Teils des Datenworts berechnen, erhöht werden, jedoch vergrößert sich hierdurch die Menge an zu übertragenden Daten.

In EP 0769703 A2 vergleicht eine Testeinheit in einem inaktiven Zeitintervall seine Empfangs- und Sendeprüfsummen für Daten einer Leiterplatte mit den Prüfsummen der Leiterplatte. EP 0280013 A1 ist der nächstliegende Stand der Technik und zeigt, für jedes Datenwort einen entsprechenden Paritätscode zu erzeugen, der zusammen mit dem Datenwort übertragen wird, um Datenübertragungsfehler zu erkennen.

Aufgabe der Erfindung ist es, ein effizienteres Verfahren zum Codieren bzw. ein entsprechendes effizienteres Verfahren zum Decodieren von Daten zu schaffen, mit denen es insbesondere ermöglicht wird, dass Veränderungen an den Daten sicher und mit einem kurzen Fehlererkennungscode erkannt werden können.

Diese Aufgabe wird durch das Verfahren zum Codieren von Daten gemäß Patentanspruch 1 bzw. durch das Verfahren zum Decodieren von Daten gemäß Patentanspruch 8 bzw. die Codiereinheit gemäß Patentanspruch 10 bzw. die Decodiereinheit gemäß Patentanspruch 12 gelöst. Weiterbildungen der Erfindung sind in den abhängigen Ansprüchen definiert.

In dem erfindungsgemäßen Codierverfahren wird für ein jeweiliges Datenwort einer Reihe von aufeinander folgend zu codierender Datenwörter ein Paritätscode basierend auf den Daten des jeweiligen Datenworts berechnet. Die Berechnung entsprechender Paritätscodes ist hinlänglich aus dem Stand der Technik bekannt und wird deshalb nicht näher erläutert. Das Codierverfahren zeichnet sich dabei dadurch aus, dass das jeweilige Datenwort mit Hilfe des in der Reihe vorhergehenden Datenworts abgewandelt wird, wobei das abgewandelte Datenwort und der berechnete Paritätscode das codierte Datenwort darstellen und das codierte Datenwort mit Hilfe des in der Reihe vorhergehenden Datenworts decodierbar ist.

Der Begriff "Datenwort" ist hier und im Folgenden weit zu verstehen und betrifft jedes Datum mit beliebiger Bitlänge. Für die Codierung des ersten Datenworts in der Reihe, für das kein vorhergehendes Datenwort existiert, wird erfindungsgemäß ein entsprechender Startwert zur Abwandlung des Datenworts verwendet. Dieser Startwert stellt somit das vorhergehende Datenwort für das erste Datenwort der Reihe dar und ist sowohl bei der Codierung als auch bei der entsprechenden Decodierung bekannt.

Das erfindungsgemäße Verfahren berücksichtigt bei der Codierung bzw. Decodierung eines jeweiligen Datenworts das vorhergehende Datenwort. Ein auftretender Fehler bzw. eine Manipulation bei der Datenübertragung pflanzt sich hierdurch fort, so dass ein Fehler auch anhand von später übertragenen Datenwörtern noch detektiert werden kann. Dies ist bei der reinen Übertragung eines Paritätscodes nicht der Fall, da der Paritätscode nur von dem gerade übertragenen Datenwort und nicht von vorhergehenden Datenwörtern abhängt.

In einer besonders bevorzugten Ausführungsform des erfindungsgemäßen Verfahrens wird als Paritätscode lediglich ein einzelnes Paritätsbit bei der Codierung verwendet. Hierdurch wird die Größe des codierten Datenworts gegenüber dem ursprünglichen Datenwort nur geringfügig um 1 Bit vergrößert.

In einer weiteren Ausführungsform des erfindungsgemäßen Verfahrens wird das jeweilige Datenwort basierend auf einer Modifikation des in der Reihe vorhergehenden Datenworts abgewandelt, wobei die Modifikation derart ausgestaltet ist, dass bei einer beliebigen Manipulation des jeweiligen codierten Datenworts der Paritätscodes eines späteren, in der Reihe nach dem jeweiligen codierten Datenwort zu codierenden Datenworts von dem Paritätscode des späteren, codierten und anschließend decodierten Datenworts abweicht. Eine beliebige Modifikation stellt dabei eine beliebige Veränderung des Inhalts eines Datenworts dar, wobei jedoch nicht die Länge des Datenworts verändert wird. Auf diese Weise wird eine sichere 100%ige Fehlererkennung nach einer vorbestimmten Anzahl von nach der Veränderung eines Datenworts durchgeführten Datenwortübertragungen gewährleistet. Durch geeignete Ausgestaltung der Modifikation kann dabei die Anzahl von nach einer Manipulation bzw. eines auftretenden Fehlers durchgeführten Übertragungen von Datenwörtern bis zur Detektion einer Paritätsabweichung geeignet festgelegt werden. Nichtsdestotrotz kann die Manipulation bzw. der Fehler bereits früher mittels der Paritätsüberprüfung erkannt werden. Spätestens erfolgt die Fehlererkennung jedoch bei der über die Modifikation festgelegten Anzahl an übertragenen Datenwörtern.

In einer besonders bevorzugten Ausführungsform wird die Modifikation des vorhergehenden Datenworts durch das Anwenden einer Funktion auf das vorhergehende Datenwort erzeugt und das abgewandelte Datenwort wird durch eine Verknüpfung des sich durch Anwenden der Funktion ergebenden Funktionswerts mit dem jeweiligen Datenwort generiert, insbesondere durch eine XOR-Verknüpfung. Die XOR-Verknüpfung erzeugt dabei einen Bitwert von 1, wenn sich die entsprechenden Bits der verknüpften Daten unterscheiden, und ansonsten den Bitwert 0. Vorzugsweise ist die Funktion dabei derart ausgestaltet, dass sie in Bezug auf die oben genannte Verknüpfung linear ist und der Paritätscode eines Datenworts von dem Paritätscode eines Werts abweicht, der sich aus einer Anzahl von Hintereinanderausführungen der Funktion auf das Datenwort ergibt.

Ein Beispiel der oben genannten Funktion wird in einer Variante der Erfindung dadurch realisiert, dass für ein jeweiliges Datenwort, dessen höchstwertiges Bit auf 0 gesetzt ist, der Funktionswert durch das Verschieben des Datenworts um eine Binärstelle in Richtung hin zu höherwertigen Bits gebildet wird und für ein jeweiliges Datenwort, dessen höchstwertiges Bit auf 1 gesetzt ist, der Funktionswert durch ein Verschieben des Datenworts um eine Binärstelle in Richtung hin zu höherwertigen Bits und eine anschließende Verknüpfung des verschobenen Datenworts mit einem primitiven Polynom gebildet wird, wobei die Verknüpfung insbesondere eine XOR-Verknüpfung ist.

In einer besonders bevorzugten Ausführungsform kann die Modifikation des vorhergehenden Datenworts mit einem linear rückgekoppelten Schieberegister erzeugt werden, wobei solche Schieberegister hinlänglich aus dem Stand der Technik bekannt sind und die oben erwähnten primitiven Polynome verwenden. Bei der Umsetzung der Funktion mit Hilfe eines linear rückgekoppelten Schieberegisters sollten vorzugsweise Polynome mit möglichst wenig Termen mit Koeffizienten = 0 verwendet werden, da dann die Umsetzung des Verfahrens in entsprechende Hardware weniger Gatter benötigt.

Neben dem oben beschriebenen Codierverfahren umfasst die Erfindung ferner ein Decodierverfahren, mit dem die Reihe der zuvor mit dem erfindungsgemäßen Codierverfahren codierten Datenwörter decodiert wird. Dabei wird das in einem jeweiligen decodierten Datenwort enthaltene abgewandelte Datenwort mit Hilfe des in der Reihe vorhergehenden decodierten Datenworts abgewandelt, woraus sich das decodierte Datenwort ergibt, wobei der Paritätscode des decodierten Datenworts berechnet wird und mit dem im codierten Datenwort enthaltenen Paritätscode verglichen wird, wobei im Falle, dass sich die verglichenen Paritätscodes unterscheiden, eine entsprechende Warnung generiert wird, welche z.B. ausgegeben wird bzw. zum Auslesen in einem Speicher hinterlegt wird. Auf diese Weise erfolgt bei der Decodierung eine geeignete Feststellung eines Fehlers bzw. einer Manipulation in den codierten Daten.

Die Erfindung betrifft darüber hinaus ein Verfahren zur Übertragung von Daten von einem Sender zu einem Empfänger, insbesondere in einer Mikroprozessoreinheit, wobei die Daten mit dem oben beschriebenen erfindungsgemäßen Codierverfahren in dem Sender codiert werden, anschließend an den Empfänger übermittelt werden und schließlich beim Empfänger mit dem oben beschriebenen erfindungsgemäßen Decodierverfahren decodiert werden.

Die Erfindung umfasst darüber hinaus eine Codiereinheit, welche derart ausgestaltet ist, dass sie Mittel aufweist, mit denen jede Variante des oben beschriebenen Codierverfahrens durchführbar ist. Analog betrifft die Erfindung ferner eine Decodiereinheit, welche Mittel aufweist, mit denen das oben beschriebene Decodierverfahren durchführbar ist.

Die Erfindung umfasst auch eine Vorrichtung zur Verarbeitung von Daten, insbesondere eine Mikroprozessoreinheit, wobei die Vorrichtung die oben beschriebene erfindungsgemäße Codiereinheit sowie die oben beschriebene erfindungsgemäße Decodiereinheit umfasst. Dabei werden im Betrieb der Vorrichtung die von der Codiereinheit codierten Daten an die Decodiereinheit übertragen und durch diese decodiert. Im Falle, dass die Vorrichtung eine Mikroprozessoreinheit ist, werden vorzugsweise Daten von einem Speicher, der flüchtig oder nicht-flüchtig sein kann, zum Prozessor der Mikroprozessoreinheit und/ oder von dem Prozessor zu einem Speicher der Mikroprozessoreinheit übertragen.

In einer besonders bevorzugten Variante ist die Mikroprozessoreinheit dabei ein Controller eines tragbaren Datenträgers, insbesondere ein Chipkartencontroller.

Ausführungsbeispiele der Erfindung werden nachfolgend anhand der beigefügten Figuren detailliert beschrieben.

Es zeigen:

Fig. 1 ein schematisches Diagramm, welches den Ablauf einer Ausführungsform des erfindungsgemäßen Verfahrens zum Codieren und Decodieren von Daten zeigt; und

Fig. 2 eine Tabelle, welche basierend auf einem Ausführungsbeispiel der Erfindung die Detektion einer Manipulation bei einer Datenübertragung verdeutlicht.

Nachfolgend wird das erfindungsgemäße Verfahren basierend auf dem Austausch von Daten in einem Chipkartencontroller beschrieben, wobei die Daten zunächst in einem Codierer COD codiert werden, der in einem entsprechenden Speicher der Chipkarte implementiert ist, beispielsweise in einem RAM, ROM, EEPROM, Flash-Speicher und dergleichen. Die codierten Daten werden zur weiteren Verarbeitung zum Mikroprozessor des Chipkartencontrollers übertragen, wobei in dem Mikroprozessor ein entsprechender Decodierer DEC zum Decodieren der Daten implementiert ist. Erfindungsgemäß ist gegebenenfalls auch der umgekehrte Übertragungsweg vom Mikroprozessor zum Speicher möglich, wobei in diesem Fall ein entsprechender Codierer im Mikroprozessor und ein entsprechender Decodierer im Speicher implementiert sind. Gegebenenfalls können auch andere Funktionseinheiten in einem Chipkartencontroller über das erfindungsgemäße Verfahren miteinander kommunizieren. Das Verfahren ist ferner nicht auf Chipkartencontroller beschränkt und kann auf beliebige Datenübertragungen zwischen zwei Einheiten angewendet werden.

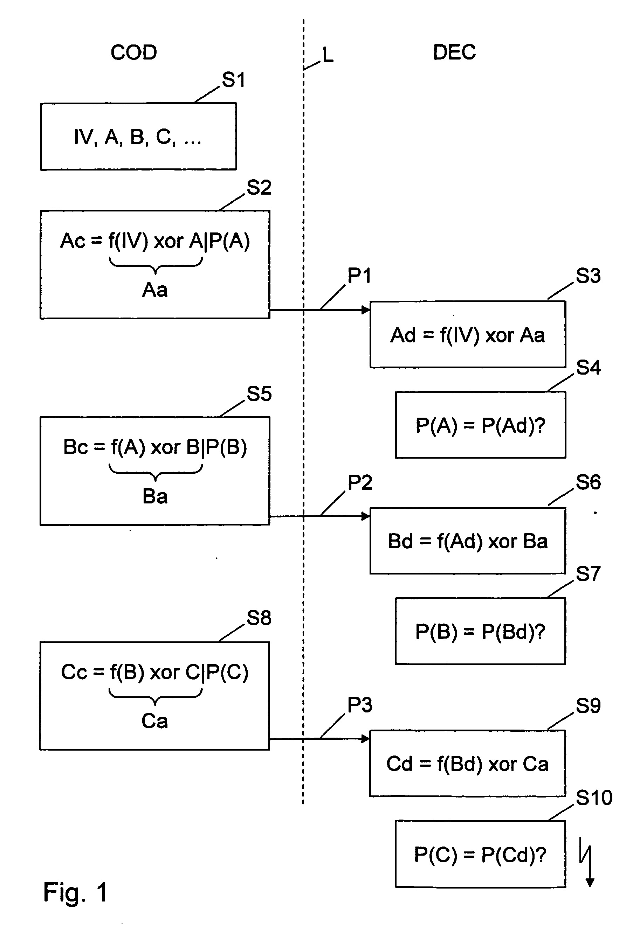

In Fig.1 sind die einzelnen Verfahrensschritte einer Ausführungsform des erfindungsgemäßen Verfahrens zur Übertragung von Daten angedeutet, wobei die vom Codierer COD durchgeführten Schritte im linken Teil der Fig.1 und die vom Decodierer DEC durchgeführten Schritte im rechten Teil von Fig.1 wiedergegeben sind. Der Codierer und der Decodierer sind dabei durch eine vertikale gestrichelte Linie L voneinander getrennt. Sowohl der Codierer COD als auch der Decodierer DEC enthalten eine Einheit, welche eine Funktion P, die zur Ermittlung eines Paritätsbits dient, sowie eine Funktion f, die weiter unten noch näher erläutert wird, berechnen kann. Ferner enthält sowohl der Codierer COD als auch der Decodierer DEC einen entsprechenden Zwischenspeicher mit der Länge eines Datenworts, der zur Codierung bzw. Decodierung benötigt wird.

Zu Beginn des Verfahrens ist in den Zwischenspeichern ein für den Codierer und den Decodierer identischer Startwert IV (IV = Initial Value) enthalten. Die zu codierenden Daten liegen als einzelne Datenwörter A, B, C, ... vor und werden in dieser Reihenfolge übertragen, wobei die Daten jedoch an beliebigen Stellen im Speicher hinterlegt sein können. Die Datenwörter IV, A, B, C, ... weisen dabei immer die gleiche Datenwortbreite (d.h. Bitlänge) auf. Bei den Daten kann es sich insbesondere um Befehle handeln, die aus dem Speicher gelesen und von dem Mikroprozessor des Chipkartencontrollers ausgeführt werden. Gemäß Fig.1 liegen somit im Codierer zu Beginn des Verfahrens, der durch den Schritt S1 angedeutet ist, neben dem Anfangswert IV die zu codierenden Datenworte A, B, C, ... vor.

Um die Wahrscheinlichkeit der Erkennung eines Fehlers bzw. einer Manipulation in der Datenübertragung zu erhöhen, wird in Schritt S2 der Fig.1 nicht das Datenwort A selbst in Kombination mit dem zuvor über die Funktion P ermittelten Paritätsbit P(A) übertragen, sondern das Datenwort A wird zunächst mit Hilfe einer Funktion f abgewandelt, wobei die Funktion f auf den Startwert IV angewendet wird und sich das abgewandelte Datenwort Aa durch eine XOR-Verknüpfung des Datenworts A mit dem Funktionswert f(IV) ergibt. In späteren Verfahrensschritten wird die Funktion f immer auf das vorhergehende Datenwort in der Reihe der zu codierenden Datenwörtern angewandt. Insgesamt bildet das abgewandelte Datenwort Aa mit dem Paritätsbit P(A) das codierte Datenwort Ac. Dieses Datenwort wird schließlich zum Decodierer DEC übertragen, wie durch den Pfeil P1 in Fig.1 angedeutet ist.

Anschließend kann in einfacher Weise im Decodierer DEC mit einer XOR-Verknüpfung des abgewandelten Datenworts Aa mit dem Funktionswert f(IV) das decodierte Datenwort Ad ermittelt werden (Schritt S3). Da das codierte Datenwort Ac bei der Übertragung unter Umständen verändert wurde und somit das decodierte Datenwort Ad nicht mit dem ursprünglichen Datenwort A übereinstimmt, wird in Schritt S4 im Decodierer DEC eine Paritätsüberprüfung durchgeführt, bei der die übertragene Parität P(A) mit der im Decodierer berechneten Parität P(Ad) des decodierten Datenworts verglichen wird. Bis zu diesem Zeitpunkt liegt die Wahrscheinlichkeit der Erkennung eines Fehlers noch bei 50 %, da ein Unterschied zwischen den beiden Paritätsbits im Falle einer Veränderung der übertragenen Daten nur mit einer Wahrscheinlichkeit von 50 % auftritt. Die Funktion f ist jedoch derart konstruiert, dass bei später übertragenen Datenwörtern auf jeden Fall eine Veränderung des ursprünglichen Datenworts A über eine Paritätsüberprüfung erkannt wird.

Geht man davon aus, dass die Paritätsbits P(A) und P(Ad) übereinstimmen, setzt sich das Verfahren ohne Generierung einer Warnung fort, wobei im nächsten Schritt S5 das nachfolgende Datenwort B codiert wird. Dazu wird wiederum das Paritätsbit P(B) des Datenworts B berechnet. Ferner wird die Funktion f nunmehr auf das vorhergehende Datenwort A angewendet, wobei der sich daraus ergebende Funktionswert f(A) mit dem ursprünglichen Datenwort B XOR-verknüpft wird. Hieraus ergibt sich das abgewandelte Datenwort Ba, welches zusammen mit dem Paritätsbit P(B) das codierte Datenwort Bc bildet. Dieses wird an den Decodierer DEC übertragen, wie durch den Pfeil P2 angedeutet ist. Im Decodierer wird dann in Schritt S6 das decodierte Datenwort Bd mittels der Funktion f ermittelt, die auf das zuvor decodierte Datenwort Ad angewendet wird, welches nunmehr in dem Zwischenspeicher des Decodierers gespeichert ist. Das decodierte Datenwort ergibt sich dabei wiederum aus einer XOR-Verkntipfung des Funktionswerts f(Ad) mit dem abgewandelten Datenwort Ba, d.h. es gilt: Bd = f(Ad) xor Ba.

Schließlich erfolgt in Schritt S7 wiederum eine Paritätsüberprüfung der übermittelten Parität P(B) mit der im Decodierer berechneten Parität P(Bd). Durch das Anwenden der Funktion f auf das vorhergehende decodierte Datenwort Ad pflanzt sich hierdurch eine Manipulation bzw. ein Fehler bei der Datenübertragung fort. Wird in Schritt S7 keine Abweichung bei der Paritätsüberprüfung erkannt, wird wiederum keine Warnung generiert.

Darauf folgend wird das Verfahren analog wie vorhergehend beschrieben fortgesetzt, d.h. in Schritt S8 wird im Codierer COD für das nächste Datenwort C das entsprechende codierte Datenwort Cc ermittelt, welches sich aus dem abgewandelten Datenwort Ca = f(B) xor C und dem Paritätsbit P(C) zusammensetzt. Dieses Datenwort wird wiederum an den Decodierer DEC übermittelt, was durch den Pfeil P3 angedeutet ist. Anschließend erfolgt eine Decodierung, d.h. es wird das decodierte Datenwort Cd = f(Bd) xor Ca ermittelt (Schritt S9). Schließlich erfolgt in Schritt S10 wiederum die Paritätsüberprüfung, d.h. es wird ermittelt, ob P(C) mit P(Cd) übereinstimmt. In der hier beschriebenen Ausführungsform wird nunmehr bei der Paritätsüberprüfung in Schritt S10 eine Diskrepanz zwischen den beiden Paritätsbits festgestellt, was durch den gezackten Pfeil in Fig. 1 angedeutet ist. Als Konsequenz wird eine entsprechende Warnung generiert, die in geeigneter Weise gespeichert bzw. ausgegeben werden kann, um hierdurch dem Benutzer-mitzuteilen, dass ein Fehler bzw. eine Manipulation bei der Datenübertragung aufgetreten ist.

Die Verbesserung der Angriffserkennung gemäß der im Vorangegangenen beschriebenen Ausführungsform besteht in der geeigneten Wahl der Funktion f, welche mit Sicherheit bei einer Veränderung eines übertragenen codierten Datenworts für ein späteres übertragenes Datenwort dazu führt, dass die Paritätsbits des später übertragenen Datenworts und des entsprechend decodierten Datenworts nicht mehr übereinstimmen. Dies wird durch die Bedingung P(x) ≠ P(f(... (f(x))...)) erreicht, wobei x ein beliebiges Datenwort mit der Datenwortbreite der zu codierenden Datenwörter darstellt.

Grundsätzlich muss die Funktion f folgende Eigenschaften aufweisen:

- F ist linear in GF(2^ Datenwortbreite) (GF = Galois-Körper);
- P(x) ≠ P(f(...(f(x))...)) für alle Datenwörter x nach einer endlichen Anzahl von Hintereinanderausführungen von f.

Die Anzahl an endlichen Hintereinanderausführungen kann dabei in geeigneter Weise festgelegt sein, wobei eine niedrigere Anzahl an Hintereinanderausführungen zu einer schnelleren Erkennung einer Datenmanipulation führt.

Geht man davon aus, dass die Funktion f nach k-maligem Hintereinanderausführen zu einem Kippen des Paritätsbits führt, ergibt sich z.B. folgendes Szenario:

Kommt es bei der Übertragung des codierten Datenworts Bc = f(Ad) xor B| P(B) zu einem Fehler, so berechnet der Decodierer DEC mit dem zuvor zwischengespeicherten Wert A den Funktionswert f(A) und versucht nach B aufzulösen. Da B fehlerhaft übertragen wurde, entspricht der decodierte Wert Bd nicht dem ursprünglichen Wert B, d.h. es gilt: Bd = B' = B xor err, wobei err dem bei der Übertragung aufgetretenen Fehler entspricht. Führt die nachfolgende Paritätsüberprüfung der Paritätsbits P(B') und P(B) nicht zur Erkennung des Fehlers (d.h. gilt P(B) = P(B')), wird das Verfahren ohne Warnung fortgesetzt, wobei im nächsten Schritt nun der codierte Wert Cc = f(B) xor C|P(C) übertragen wird.

Der Decodierer berechnet zur Decodierung nunmehr nicht f(B), sondern f(B') und erhält aufgrund der oben definierten linearen Eigenschaft von f den decodierten Wert C' = f(B) xor C xor f(B') = C xor f(err). Da sich die Parität von C' in Abhängigkeit von dem Fehler err nur mit einer Wahrscheinlichkeit von 50 % ändert, kann auch das neue, falsche Datenwort C' gegebenenfalls unerkannt bleiben. Es kommt somit zu einer Folge von "falschen" übertragenen Datenwörtern. Spätestens nach der Übertragung von (k+1) Datenwörtern wird über die Paritätsüberprüfung aufgrund der obigen Eigenschaften von f jedoch der Fehler erkannt, woraufhin eine entsprechende Warnung generiert wird.

Im Folgenden wird die Durchführung des erfindungsgemäßen Verfahrens am Beispiel einer f-Funktion erläutert, welche mit Hilfe eines LFSR-Registers (LFSR = Linear Feedback Shift Register) erzeugbar ist.

Dabei gilt:

$$f(x) = (x<<1), \text{ falls } Msb(x) == 0,$$

$$(x<<1) \text{ xor PrimPol, falls } Msb(x) = 1,$$

mit folgenden Definitionen:

<<     bitweises Schieben des Wertes um eine Binärstelle nach links, d.h. hin zu höherwertigen Bits

Msb:     höchstwertiges Bit

PrimPol:     primitives Polynom über 2^Busbreite, wobei nachfolgend PrimPol(x)=x^4+x+1 gilt, d.h. es wird mit 0x13 XOR-verknüpft.

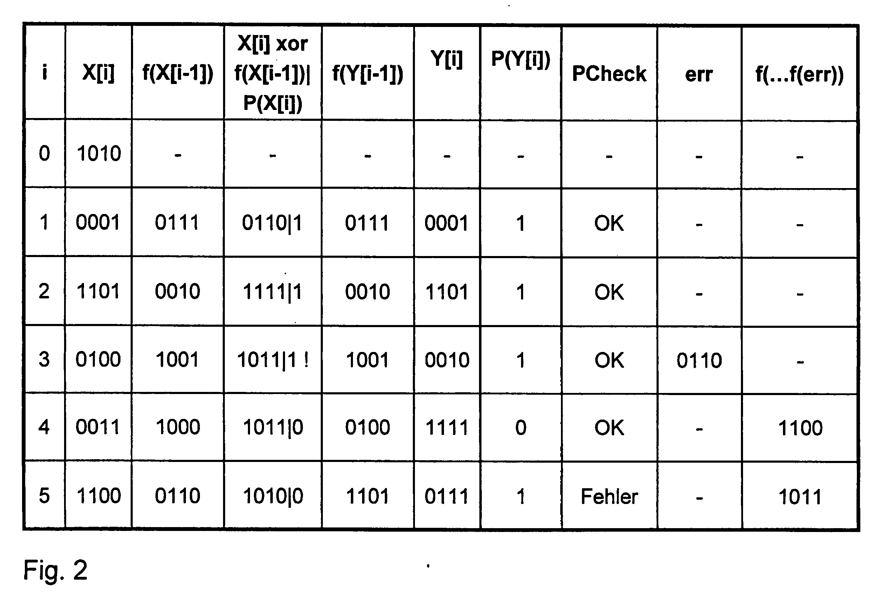

Es wird hierbei eine Busbreite von vier Bits betrachtet, d.h. ein zu übertragendes Datenwort besteht aus vier Bits. In der Tabelle der Fig. 2 sind die sich bei der Verwendung der obigen Funktion f bei der Codierung und Decodierung ergebenden Größen wiedergegeben. Es sind dabei in der ersten Spalte die Schritte i = 0,1, ..., 5 zur Übertragung von fünf aufeinander folgenden Datenwörtern angegeben. Die in jedem Übertragungsschritt übertragenen Datenwörter sind in der zweiten Spalte der Tabelle mit X[i] (i = 1, 2, ..., 5) bezeichnet. Der im Codierer und Decodierer hinterlegte Startwert IV stellt hierbei das Datenwort X[0] dar.Der entsprechende, sich aus dem vorhergehenden Datenwort ergebende Funktionswert ist mit f(X[i-1]) in der dritten Spalte der Tabelle bezeichnet. Der darauf basierende codierte und übertragene Wert X[i] xor f(X[i-1])| P(X[i]) ist in der vierten Spalte angegeben. In der fünften Spalte sind die auf Seiten des Decodierers ermittelten Funktionswerte f(Y[i]) enthalten. In der sechsten Spalte ist das decodierte Datenwort Y[i] wiedergegeben. Sofern keine Übertragungsfehler auftreten, gilt X[i] = Y[i]. In der siebten Spalte ist die vom Decodierer ermittelte Parität P(Y[i]) des decodierten Datenworts angegeben. Die achte Spalte, welche als PCheck bezeichnet ist, enthält das Ergebnis der Paritätsüberprüfung, wobei OK bedeutet, dass die geprüften Paritäten P(X[i]) und P(Y[i]) übereinstimmen und "Fehler" bedeutet, dass die geprüften Paritäten nicht übereinstimmen. In der neunten Spalte ist ein bei der Datenübertragung aufgetretener Fehler err wiedergegeben. Die zehnte Spalte enthält den Wert der Hintereinanderausführung der Funktion f basierend auf dem Fehler err, d.h. f(...f(err)).

Das Verfahren wird bei i = 0 mit dem Startwert IV = 1010 initialisiert. In Schritt i =1 wird das erste Datenwort 0001 übertragen und anschließend decodiert. Bei dieser Übertragung tritt kein Fehler auf, so dass der Status der Paritätsüberprüfung OK ist. Bei der Datenübertragung im nächsten Schritt wird das Datenwort 1101 wiederum fehlerfrei übertragen, so dass sich auch bei dieser Übertragung bei der Paritätsprüfung auf Seiten des Decodierers keine Diskrepanz ergibt. Schließlich tritt bei i = 3 ein Fehler bei der Datenübertragung auf. Das ursprünglich zu übertragende Datenwort 0100 wird dabei bei der Übertragung manipuliert, so dass beim Decodierer das Datenwort 1011|1 anstatt von 1101|1 empfangen wird. Das Auftreten des Fehlers ist dabei mit einem Ausrufezeichen in dem entsprechenden Eintrag in der vierten Spalte gekennzeichnet. Dieser Fehler wird jedoch im Schritt i = 3 nicht erkannt, denn das Paritätsbit des decodierten Datenworts Y[i] entspricht dem Paritätsbit des Datenworts X[i].

In Schritt i = 4 wird als nächstes Datenwort die Sequenz 0011 übertragen, wobei sich der vorhergehende Fehler aufgrund der Verwendung des Funktionswerts f(Y[i-1]) auf Seiten des Decodierers fortpflanzt. In Schritt i = 4 wird der Fehler wiederum nicht erkannt, da das Paritätsbit des decodierten Datenworts wiederum mit dem Paritätsbit des übertragenen Datenworts übereinstimmt. In Schritt i = 5 kommt es schließlich zur Detektion des Fehlers, da nunmehr das Paritätsbit des decodierten Datenworts den Wert 1 aufweist, wohingegen das Paritätsbit des übertragenen Datenworts den Wert 0 hat.

Wie sich aus der Tabelle der Fig. 2 ergibt, wird somit der bei i = 3 eingebrachte Fehler zunächst nicht detektiert, da er trotz Veränderung des Datenworts paritätserhaltend war. Aufgrund der Modifikation der codierten Datenwörter mit der Funktion f pflanzt sich der Fehler jedoch fort. Wenn es bei der Fehlerfortpflanzung zu einem Wechsel der Parität kommt, wird der Fehler detektiert. Mit Hilfe der obigen, über ein linear rückgekoppeltes Schieberegister realisierbaren Funktion kann ein solcher Wechsel der Parität und damit eine Detektion des Fehlers garantiert werden.

Das im Vorangegangenen beschriebene erfindungsgemäße Verfahren weist eine Reihe von Vorteilen auf. Insbesondere kann ein bei der Datenübertragung auftretender Fehler sicher spätestens bei einer vorgegebenen Anzahl von übertragenen Datenworten detektiert werden. Im Gegensatz dazu kann bei einer Fehlererkennung nur basierend auf einem Paritätsbit ein zunächst nicht erkannter Fehler später nicht mehr ermittelt werden. Ferner liegt die Wahrscheinlichkeit der Fehlererkennung bei jedem übertragenen Datenwort nur bei 50 %, so dass die Erkennung eines Fehlers nicht garantiert werden kann.

**Patentansprüche**

1. Verfahren zum Codieren von digitalen Daten, insbesondere von in einer Mikroprozessoreinheit verarbeiteten Daten, bei dem:

    - für ein jeweiliges Datenwort (A, B, C) einer Reihe von aufeinander folgend zu codierender Datenwörter ein Paritätscode (P(A), P(B), P(C)) basierend auf den Daten des jeweiligen Datenworts (A, B, C) berechnet wird (S2, S5, S8);
    - das jeweilige Datenwort (A, B, C) mit Hilfe des in der Reihe vorhergehenden Datenworts (A, B, C) abgewandelt wird (S2, S5, S8), wobei das abgewandelte Datenwort (Aa, Ba, Ca) und der Paritätscode (P(A), P(B), P(C)) das codierte Datenwort (Ac, Bc, Cc) darstellen und das codierte Datenwort (Ac, Bc, Cc) mit Hilfe des in der Reihe vorhergehenden Datenworts (A, B, C) decodierbar ist (S3, S6, S9).

2. Verfahren nach Anspruch 1, **dadurch gekennzeichnet, dass** der Paritätscode (P(A), P(B), P(C)) ein Paritätsbit ist.

3. Verfahren nach Anspruch 1 oder 2, **dadurch gekennzeichnet, dass** das jeweilige Datenwort (A, B, C) basierend auf einer Modifikation (f(A), f(B), f(C)) des in der Reihe vorhergehenden Datenworts (A, B, C) abgewandelt wird, wobei die Modifikation (f(A), f(B), f(C)) derart ausgestaltet ist, dass bei einer beliebigen Veränderung des jeweiligen codierten Datenworts (Ac, Bc, Cc) der Paritätscode (P(A), P(B), P(C)) eines späteren, in der Reihe nach dem jeweiligen codierten Datenwort (Ac, Bc, Cc) zu codierenden Datenworts (A, B, C) von dem Paritätscode (P(Ad, Bd, Cd)) des späteren, codierten und anschließend decodierten Datenworts (Ad, Bd, Cd) abweicht.

4. Verfahren nach Anspruch 3, **dadurch gekennzeichnet, dass** die Modifikation (f(A), f(B), f(C)) des vorhergehenden Datenworts (A, B, C) durch das Anwenden einer Funktion auf das vorhergehende Datenwort (A, B, C) erzeugt wird und das abgewandelte Datenwort durch eine Verknüpfung des sich durch Anwenden der Funktion ergebenden Funktionswerts (f(A), f(B), f(C)) mit dem jeweiligen Datenwort (A, B, C) generiert wird, insbesondere durch eine XOR-Verknüpfung.

5. Verfahren nach Anspruch 4, **dadurch gekennzeichnet, dass** die Funktion derart ausgestaltet ist, dass sie in Bezug auf die Verknüpfung linear ist und der Paritätscode (P(A), P(B), P(C)) eines Datenworts von dem Paritätscode eines Werts abweicht, der sich aus einer Anzahl von Hintereinanderausführungen der Funktion auf das Datenwort ergibt.

6. Verfahren nach Anspruch 4 oder 5, **dadurch gekennzeichnet, dass** die Funktion derart ausgestaltet ist, dass für ein jeweiliges Datenwort (A, B, C), dessen höchstwertiges Bit auf 0 gesetzt ist, der Funktionswert (f(A), f(B), f(C)) durch ein Verschieben des Datenworts (A, B, C) um eine Binärstelle in Richtung hin zu höherwertigen Bits gebildet wird und für ein jeweiliges Datenwort (A, B, C), dessen höchstwertiges Bit auf 1 gesetzt ist, der Funktionswert (f(A), f(B), f(C)) durch ein Verschieben des Datenworts (A, B, C) um eine Binärstelle in Richtung hin zu höherwertigen Bits und eine anschließende Verknüpfung des verschobenen Datenworts mit einem primitiven Polynom gebildet wird, wobei die Verknüpfung insbesondere eine XOR-Verknüpfung ist.

7. Verfahren nach einem der Ansprüche 3 bis 6, **dadurch gekennzeichnet, dass** die Modifikation (f(A), f(B), f(C)) mit einem linear rückgekoppelten Schieberegister erzeugt wird.

8. Verfahren zum Decodieren von Daten, **dadurch gekennzeichnet, dass** die Reihe der zuvor mit einem Verfahren der vorhergehenden Ansprüche codierten Datenwörter (Ac, Bc, Cc) decodiert wird, wobei das in einem jeweiligen codierten Datenwort (Ac, Bc, Cc) enthaltene abgewandelte Datenwort (Aa, Ba, Ca) mit Hilfe des in der Reihe vorhergehenden decodierten Datenworts (Ad, Bd, Cd) abgewandelt wird (S3, S6, S9), woraus sich das decodierte Datenwort (Ad, Bd, Cd) ergibt, wobei der Paritätscode (P(Ad), (Bd), Cd)) des decodierten Datenworts (Ad, Bd, Cd) berechnet wird und mit dem im codierten Datenwort (Ac, Bc, Cc) enthaltenen Paritätscode (P(A), P(B), P(C)) verglichen wird (S4, S7, S10), wobei im Falle, dass sich die verglichenen Paritätscodes (P(A), P(B), P(C); P(Ad), (Bd), (Cd)) unterscheiden, eine Warnung generiert wird.

9. Verfahren zur übertragung von Daten von einem Sender (COD) zu einem Empfänger (DEC), insbesondere in einer Mikroprozessoreinheit, **dadurch gekennzeichnet, dass** die Daten (A, B, C) mit einem Verfahren nach einem der Ansprüche 1 bis 7 in dem Sender (COD) codiert werden, die codierten Daten (Ac, Bc, Cc) an den Empfänger (DEC) übermittelt werden und im Empfänger (DEC) mit dem Verfahren nach Anspruch 8 decodiert werden.

10. Codiereinheit, **dadurch gekennzeichnet, dass** die Codiereinheit derart ausgestaltet ist, dass mit der Codiereinheit ein Verfahren durchführbar ist, bei dem:

- für ein jeweiliges Datenwort (A, B, C) einer Reihe von aufeinander folgend zu codierender Datenwörter ein Paritätscode (P(A), P(B), P(C)) basierend auf den Daten des jeweiligen Datenworts (A, B, C) berechnet wird;
- das jeweilige Datenwort (A, B, C) mit Hilfe des in der Reihe vorhergehenden Datenworts (A, B, C) abgewandelt wird, wobei das abgewandelte Datenwort (Aa, Ba, Ca) und der Paritätscode (P(A), P(B), P(C)) das codierte Datenwort (Ac, Bc, Cc) darstellen und das codierte Datenwort (Ac, Bc, Cc) mit Hilfe des in der Reihe vorhergehenden Datenworts (A, B, C) decodierbar ist.

11. Codiereinheit nach Anspruch 10, **dadurch gekennzeichnet, dass** die Codiereinheit (COD) derart ausgestaltet ist, dass mit der Codiereinheit (COD) ein Verfahren nach einem der Ansprüche 2 bis 7 durchführbar ist.

12. Decodiereinheit, **dadurch gekennzeichnet, dass** die Decodiereinheit (DEC) derart ausgestaltet ist, dass mit der Decodiereinheit (DEC) ein Verfahren durchführbar ist, bei dem die Reihe der zuvor mit einem Verfahren der Ansprüche 1 bis 7 codierten Datenwörter (Ac, Bc, Cc) decodiert wird, wobei das in einem jeweiligen codierten Datenwort (Ac, Bc, Cc) enthaltene abgewandelte Datenwort (Aa, Ba, Ca) mit Hilfe des in der Reihe vorhergehenden decodierten Datenwort (Ad, Bd, Cd) abgewandelt wird, woraus sich das decodierte Datenwort (Ad, Bd, Cd) ergibt, wobei der Paritätscode (P(Ad), (Bd), (Cd)) des decodierten Datenworts (Ad, Bd, Cd) berechnet wird und mit dem im codierten Datenwort (Ac, Bc, Cc) enthaltenen Paritätscode (P(A), P(B), P(C)) verglichen wird, wobei im Falle, dass sich die verglichenen Paritätscodes (P(A), P(B), P(C); P(Ad), (Bd), (Cd)) unterscheiden, eine Warnung generiert wird.

13. Vorrichtung zum Verarbeiten von Daten, insbesondere Mikroprozessoreinheit, **dadurch gekennzeichnet, dass** die Vorrichtung eine Codiereinheit (COD) nach Anspruch 10 oder 11 und eine Decodiereinheit (DEC) nach Anspruch 12 umfasst, wobei im Betrieb der Vorrichtung die von der Codiereinheit codierten Daten (Ac, Bc, Cc) an die Decodiereinheit (DEC) übertragen und durch diese decodiert werden.

14. Vorrichtung nach Anspruch 13, wobei die Vorrichtung eine Mikroprozessoreinheit ist und im Betrieb Daten von einem Speicher zum Prozessor der Mikroprozessoreinheit und/ oder von dem Prozessor zu einem Speicher der Mikroprozessoreinheit übertragen werden.

15. Vorrichtung nach Anspruch 13 oder 14, wobei die Mikroprozessoreinheit ein Controller eines tragbaren Datenträgers ist, insbesondere ein Chipkartencontroller.

**Claims**

1. A method for encoding digital data, in particular data processed in a microprocessor unit, in which:

   - for a respective data word (A, B, C) of a series of data words to be encoded consecutively there is computed (S2, S5, S8) a parity code (P(A), P(B), P(C)) based on the data of the respective data word (A, B, C);
   - the respective data word (A, B, C) is altered (S2, S5, S8) with the aid of the data word (A, B, C) preceding it in the series, wherein the altered data word (Aa, Ba, Ca) and the parity code (P(A), P(B), P(C)) represent the encoded data word (Ac, Bc, Cc) and the encoded data word (Ac, Bc, Cc) can be decoded (S3, S6, S9) with the aid of the data word (A, B, C) preceding it in the series.

2. The method according to claim 1, **characterized in that** the parity code (P(A), P(B), P(C)) is a parity bit.

3. The method according to claim 1 or 2, **characterized in that** the respective data word (A, B, C) is altered on the basis of a modification (f(A), f(B), f(C)) of the data word (A, B, C) preceding it in the series, with the modification (f(A), f(B), f(C)) being designed in such a fashion that upon any desired alteration of the respective encoded data word (Ac, Bc, Cc) the parity code (P(A), P(B), P(C)) of a later data word (A, B, C) to be encoded in the series after the respective encoded data word (Ac, Bc, Cc) diverts from the parity code (P(Ad, Bd, Cd)) of the later, encoded and subsequently decoded data word (Ad, Bd, Cd).

4. The method according to claim 3, **characterized in that** the modification (f(A), f(B), f(C)) of the preceding data word (A, B, C) is generated by applying a function to the preceding data word (A, B, C) and the altered data word is generated by performing a logical operation between the function value (f(A), f(B), f(C)) that results from applying the function and the respective data word (A, B, C), in particular by an XOR operation.

5. The method according to claim 4, **characterized in that** the function is designed in such a fashion that it is linear with reference to the logical operation and the parity code (P(A), P(B), P(C)) of a data word diverts from the parity code of a value resulting from a number of consecutive executions of the function on the data word.

6. The method according to claim 4 or 5, **characterized in that** the function is designed in such a fashion that for a respective data word (A, B, C), whose most significant bit is set to 0, the function value (f(A), f(B), f(C)) is formed by shifting the data word (A, B, C) by a binary position in the direction of more significant bits, and for a respective data word (A, B, C) whose most significant bit is set to 1, the function value (f(A), f(B), f(C)) is formed by shifting the data word (A, B, C) by a binary position in the direction of more significant bits and subsequently performing a logical operation between the shifted data word and a primitive polynomial, with the logical operation being in particular an XOR operation.

7. The method according to any of the claims 3 to 6, **characterized in that** the modification (f(A), f(B), f(C)) is generated with a linear feedback shift register.

8. A method for decoding data, **characterized in that** the series of data words (Ac, Bc, Cc) previously encoded with a method of the preceding claims, is decoded, wherein the altered data word (Aa, Ba, Ca) contained in a respective encoded data word (Ac, Bc, Cc) is altered (S3, S6, S9) with the aid of the decoded data word (Ad, Bd, Cd) preceding it in the series, from which there results the decoded data word (Ad, Bd, Cd), with the parity code (P(Ad), (Bd), (Cd)) of the decoded data word (Ad, Bd, Cd) being computed and compared (S4, S7, S10) to the parity code (P(A), P(B), P(C)) contained in the encoded data word (Ac, Bc, Cc), wherein, in the case that the compared parity codes (P(A), P(B), P(C); P(Ad), (Bd), (Cd)) differ from each other, a warning is generated.

9. A method for transmitting data from an emitter (COD) to a receiver (DEC), in particular in a microprocessor unit, **characterized in that** the data (A, B, C) are encoded with a method according to any of the claims 1 to 7 in the emitter (COD), the encoded data (Ac, Bc, Cc) are transmitted to the receiver (DEC) and are decoded in the receiver (DEC) with the method according to claim 8.

10. An encoding unit, **characterized in that** the encoding unit is designed in such a fashion that with the encoding unit a method can be carried out in which:

- for a respective data word (A, B, C) of a series of data words to be encoded consecutively there is computed a parity code (P(A), P(B), P(C)) based on the data of the respective data word (A, B, C);
- the respective data word (A, B, C) is altered with the aid of the data word (A, B, C) preceding it in the series, wherein the altered data word (Aa, Ba, Ca) and the parity code (P(A), P(B), P(C)) represent the encoded data word (Ac, Bc, Cc) and the encoded data word (Ac, Bc, Cc) can be decoded with the aid of the data word (A, B, C) preceding it in the series.

11. The encoding unit according to claim 10, **characterized in that** the encoding unit (COD) is designed in such a fashion that with the encoding unit (COD) a method according to any of the claims 2 to 7 can be carried out.

12. A decoding unit, **characterized in that** the decoding unit (DEC) is designed in such a fashion that with the decoding unit (DEC) a method can be carried out, in which the series of data words (Ac, Bc, Cc) previously encoded with a method of the claims 1 to 7 is decoded, wherein the altered data word (Aa, Ba, Ca) contained in a respective encoded data word (Ac, Bc, Cc) is altered with the aid of the decoded data word (Ad, Bd, Cd) preceding it in the series, from which there results the decoded data word (Ad, Bd, Cd), with the parity code (P(Ad), (Bd), (Cd)) of the decoded data word (Ad, Bd, Cd) being computed and compared with the parity code (P(A), P(B), P(C)) contained in the encoded data word (Ac, Bc, Cc), wherein, in the case that the compared parity codes (P(A), P(B), P(C); P(Ad), (Bd), (Cd)) differ from each other, a warning is generated.

13. An apparatus for processing data, in particular a microprocessor unit, **characterized in that** the apparatus comprises an encoding unit (COD) according to claim 10 or 11 and a decoding unit (DEC) according to claim 12, wherein during the operation of the apparatus the data (Ac, Bc, Cc) encoded by the encoding unit are transmitted to the decoding unit (DEC) and decoded by it.

14. The apparatus according to claim 13, wherein the apparatus is a microprocessor unit and during operation data are transmitted from a memory to the processor of the microprocessor unit and/ or from the processor to a memory of the microprocessor unit.

15. The apparatus according to claim 13 or 14, with the microprocessor unit being a controller of a portable data carrier, in particular a chip card controller.

**Revendications**

1. Procédé de codage de données numériques, notamment de données traitées dans une unité de microprocesseur, dans lequel :

- pour un mot de données (A, B, C) respectif d'une série de mots de données à coder consécutivement, un code de parité (P(A), P(B), P(C)) est calculé (S2, S5, S8) sur la base des données du mot de données (A, B, C) respectif;
- le mot de données (A, B, C) respectif est converti (S2, S5, S8) à l'aide du mot de données précédent (A, B, C) dans la série, le mot de données (Aa, Ba, Ca) converti et le code de parité (P(A), P(B), P(C)) représentant le mot de données (Ac, Bc, Cc) codé et le mot de données (Ac, Bc, Cc) codé étant décodable (S3, S6, S9) à l'aide du mot de données précédent (A, B, C) dans la série.

**2.** Procédé selon la revendication 1, **caractérisé en ce que** le code de parité (P(A), P(B), P(C)) est un bit de parité.

**3.** Procédé selon la revendication 1 ou 2, **caractérisé en ce que** le mot de données (A, B, C) respectif est converti sur la base d'une modification (f(A), f(B), f(C)) du mot de données précédent (A, B, C) dans la série, la modification (f(A), f(B), f(C)) étant réalisée de telle manière que, lors d'une modification quelconque du mot de données (Ac, Bc, Cc) codé respectif, le code de parité (P(A), P(B), P(C)) d'un mot de données ultérieur (A, B, C) à coder après le mot de données (Ac, Bc, Cc) codé respectif dans la série diverge du code de parité (P(Ad, Bd, Cd)) du mot de données ultérieur (Ad, Bd, Cd) codé et ensuite décodé.

**4.** Procédé selon la revendication 3, **caractérisé en ce que** la modification (f(A), f(B), f(C)) du mot de données précédent (A, B, C) est générée par l'application d'une fonction au mot de données précédent (A, B, C) et **en ce que** le mot de données converti est généré par une combinaison de la valeur de fonction (f(A), f(B), f(C)) découlant de l'application de la fonction avec le mot de données (A, B, C) respectif, notamment par une combinaison XOR.

**5.** Procédé selon la revendication 4, **caractérisé en ce que** la fonction est réalisée de telle sorte qu'elle est linéaire par rapport à la combinaison et **en ce que** le code de parité (P(A), P(B), P(C)) d'un mot de données diverge du code de parité d'une valeur qui découle d'un certain nombre d'exécutions successives de la fonction sur le mot de données.

**6.** Procédé selon la revendication 4 ou 5, **caractérisé en ce que** la fonction est réalisée de telle sorte que, pour un mot de données (A, B, C) respectif dont le bit de poids le plus fort est fixé à 0, la valeur de fonction (f(A), f(B), f(C)) est constituée par un déplacement du mot de données (A, B, C) d'une place binaire en direction de bits de plus fort poids, et que pour un mot de données (A, B, C) respectif dont le bit de poids le plus fort est fixé à 1, la valeur de fonction (f(A), f(B), f(C)) est constituée par un déplacement du mot de données (A, B, C) d'une place binaire en direction de bits de plus fort poids, et qu'une combinaison subséquente du mot de données déplacé est constituée avec un polynôme primitif, la combinaison étant notamment une combinaison XOR.

**7.** Procédé selon une des revendications de 3 à 6, **caractérisé en ce que** la modification (f(A), f(B), f(C)) est générée avec un registre à décalage linéairement rétrocouplé.

**8.** Procédé de décodage de données, **caractérisé en ce que** la série des mots de données (Ac, Bc, Cc) codés auparavant avec un procédé des revendications précédentes est décodée, le mot de données (Aa, Ba, Ca) converti contenu dans un mot de données (Ac, Bc, Cc) codé respectif étant converti (S3, S6, S9) à l'aide du mot de données précédent (Ad, Bd, Cd) décodé dans la série, d'où découle le mot de données (Ad, Bd, Cd) décodé, le code de parité (P(Ad), (Bd), (Cd)) du mot de données (Ad, Bd, Cd) décodé étant calculé et étant comparé (S4, S7, S10) avec le code de parité (P(A), P(B), P(C)) contenu dans le mot de données (Ac, Bc, Cc) codé et, dans le cas où les codes de parité
(P(A), P(B), P(C); P(Ad), (Bd), (Cd)) comparés diffèrent, un avertissement étant généré.

**9.** Procédé de transmission de données d'un émetteur (COD) à un récepteur (DEC), notamment dans une unité de microprocesseur, **caractérisé en ce que** les données (A, B, C) sont codées dans l'émetteur (COD) avec un procédé selon une des revendications de 1 à 7, et **en ce que** les données (Ac, Bc, Cc) codées sont transmises au récepteur (DEC) et sont décodées dans le récepteur (DEC) avec le procédé selon la revendication 8.

**10.** Unité de codage, **caractérisée en ce que** l'unité de codage est réalisée de telle façon que, avec l'unité de codage, un procédé est exécutable, dans lequel:

   - pour un mot de données (A, B, C) respectif d'une série de mots de données à coder consécutivement, un code de parité (P(A), P(B), P(C)) est calculé sur la base des données du mot de données (A, B, C) respectif;
   - le mot de données (A, B, C) respectif est converti à l'aide du mot de données précédent (A, B, C) dans la série, le mot de données (Aa, Ba, Ca) converti et le code de parité (P(A), P(B), P(C)) représentant le mot de données (Ac, Bc, Cc) codé et le mot de données (Ac, Bc, Cc) codé étant décodable à l'aide du mot de données précédent (A, B, C) dans la série.

**11.** Unité de codage selon la revendication 10, **caractérisé en ce que** l'unité de codage (COD) est réalisée de telle façon que, avec l'unité de codage (COD), un procédé est exécutable selon une des revendications de 2 à 7.

**12.** Unité de décodage, **caractérisée en ce que** l'unité de décodage (DEC) est réalisée de telle façon que, avec l'unité de décodage (DEC), un procédé est exécutable, dans lequel la série des mots de données (Ac, Bc, Cc) auparavant codés avec un procédé des revendications de 1 à 7 est décodée, le mot de données (Aa, Ba, Ca) converti contenu dans un mot de données (Ac, Bc, Cc) codé respectif étant converti à l'aide du mot de données précédent (Ad, Bd, Cd) décodé dans la série, d'où découle le mot de données (Ad, Bd, Cd) décodé, le code de parité (P(Ad), (Bd), (Cd)) du mot de données (Ad, Bd, Cd) décodé étant calculé et étant comparé avec le code de parité (P(A), P(B), P (C)) contenu dans le mot de données (Ac, Bc, Cc) codé et, dans le cas où les codes de parité (P(A), P(B), P(C); P (Ad), (Bd), (Cd)) comparés diffèrent, un avertissement étant généré.

13. Dispositif de traitement de données, notamment unité de microprocesseur, **caractérisé en ce que** le dispositif comprend une unité de codage (COD) selon la revendication 10 ou 11 et une unité de décodage (DEC) selon la revendication 12, les données (Ac, Bc, Cc) codées par l'unité de codage étant, lors l'exploitation du dispositif, transmises à l'unité de décodage (DEC) et étant décodées par cette dernière.

14. Dispositif selon la revendication 13, le dispositif étant une unité de microprocesseur et des données étant, lors l'exploitation, transmises d'une mémoire au processeur de l'unité de microprocesseur et/ou du processeur à une mémoire de l'unité de microprocesseur.

15. Dispositif selon la revendication 13 ou 14, l'unité de microprocesseur étant un contrôleur d'un support de données portable, notamment un contrôleur de carte à puce.

COD | L | DEC

S1

IV, A, B, C, ...

S2

$Ac = \underbrace{f(IV) \; xor \; A}_{Aa} | P(A)$

P1 S3

$Ad = f(IV) \; xor \; Aa$

S4

$P(A) = P(Ad)?$

S5

$Bc = \underbrace{f(A) \; xor \; B}_{Ba} | P(B)$

P2 S6

$Bd = f(Ad) \; xor \; Ba$

S7

$P(B) = P(Bd)?$

S8

$Cc = \underbrace{f(B) \; xor \; C}_{Ca} | P(C)$

P3 S9

$Cd = f(Bd) \; xor \; Ca$

S10

$P(C) = P(Cd)?$

Fig. 1

| i | X[i] | f(X[i-1]) | X[i] xor f(X[i-1])\| P(X[i]) | f(Y[i-1]) | Y[i] | P(Y[i]) | PCheck | err | f(...f(err)) |
|---|------|-----------|------------------------------|-----------|------|---------|--------|-----|--------------|
| 0 | 1010 | - | - | - | - | - | - | - | - |
| 1 | 0001 | 0111 | 0110\|1 | 0111 | 0001 | 1 | OK | - | - |
| 2 | 1101 | 0010 | 1111\|1 | 0010 | 1101 | 1 | OK | - | - |
| 3 | 0100 | 1001 | 1011\|1 ! | 1001 | 0010 | 1 | OK | 0110 | - |
| 4 | 0011 | 1000 | 1011\|0 | 0100 | 1111 | 0 | OK | - | 1100 |
| 5 | 1100 | 0110 | 1010\|0 | 1101 | 0111 | 1 | Fehler | - | 1011 |

Fig. 2

EP 2 446 362 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0769703 A2
- EP 0280013 A1